# EUROPEAN PATENT APPLICATION

(11) **EP 2 833 280 A2**
(43) Date of publication of application: **04.02.2015**
(21) Application number: 14178661.6
(22) Date of filing: 25.07.2014
(51) Int. Cl.: G06F 17/30

(54) **Method for automatically storing new media**

(30) Priority: 02.08.2013 US 201313957614
(71) Applicant: Google Inc., Mountain View, CA 94043 (US)
(72) Inventor: Bilinski, Brandon, Mountain View, CA 94043 (US); Ghosh, Debajit, Mountain View, CA 94043 (US); Joyce, Paul, Mountain View, CA 94043 (US); Choi, Gyeong Sik, Mountain View, CA 94043 (US); Otto, Owen Daniel, Mountain View, CA 94043 (US); Friesen, Eric, Mountain View, CA 94043 (US); Dolinsky, Dmitry, Mountain View, CA 94043 (US)
(74) Representative: Smith, Jeremy Robert

(57) **Abstract**

Methods and systems for automatically downloading and storing media on a mobile device are provided. A method at a mobile device includes an auto-storing process, which includes receiving, at a first time within a predefined time range, a first set of media items. The first set of media items may be based on a user media preference. Next, at a second time within the predefined time range, it may be determined that at least a portion of the first set of media items has been activated. Based on the activated media items, at least one user media activation characteristic may be determined. In response to determining that at least a portion of the first set of media items has been activated, a second set of media items based on the user media activation characteristic may be received.

## Description

### BACKGROUND

Services for streaming and/or downloading media content such as videos, movies, music, books, magazines, TV shows, and the like are gaining in popularity; however, these services typically require a network connection (e.g. cellular network, the Internet, local area network, and the like) in order to stream and/or download media content to a device. There are still a large number of locations where a user's mobile device does not have a network connection such as in airplanes, subways, tunnels, the wilderness, and the like, where media streaming and/or downloading services are not available. In particular, when a user is in an area without access to a network connection the user may not be able to download or stream media content from their personal media collection or from a large subscription collection of media content to his mobile device. Some content streaming services allow users to select and download media content for offline consumption. However, this requires that a user choose to download particular media content, and this content may quickly become old or outdated. Furthermore, maintaining and managing media content to be downloaded can be time consuming and cumbersome for a user.

Additionally, downloading and/or streaming large amounts of media content to a user's mobile device that is connected only to a cellular network can be time and resource consuming, depending on the varying download speed of the cellular network and the user's location. Such large and time consuming downloads can also quickly drain the mobile device's battery.

### BRIEF SUMMARY

According to an embodiment of the disclosed subject matter, a method at a mobile device includes receiving, at a first time within a predefined time range, a first set of media items. The first set of media items may be based on a user media preference. Next, at a second time within the predefined time range, it may be determined that at least a portion of the first set of media items has been activated. Based on the activated media items, at least one user media activation characteristic may be determined. In response to determining that at least a portion of the first set of media items has been activated, a second set of media items based on the user media activation characteristic may be received.

An implementation of the disclosed subject matter provides a system that includes a mobile device comprising a processor configured to receive, at a first time within a predefined time range, a first set of media items. The first set of media items may be based on a user media preference. Next, at a second time within the predefined time range, it may be determined that at least a portion of the first set of media items has been activated. Based on the activated media items, at least one user media activation characteristic may be determined. In response to determining that at least a portion of the first set of media items has been activated, a second set of media items based on the user media activation characteristic may be received.

Implementations as disclosed herein automatically and regularly cache new media on a user's mobile device based on the user's media preferences and past media activation behavior. Because this new media is cached on the user's device, the user may be able to access new and enjoyable media even when in a location without a network connection. Additional features, advantages, and embodiments of the disclosed subject matter may be set forth or apparent from consideration of the following detailed description, drawings, and claims. Moreover, it is to be understood that both the foregoing summary and the following detailed description are examples and are intended to provide further explanation without limiting the scope of the claims.

### BRIEF DESCRIPTION OF THE DRAWINGS

The accompanying drawings, which are included to provide a further understanding of the disclosed subject matter, are incorporated in and constitute a part of this specification. The drawings also illustrate embodiments of the disclosed subject matter and together with the detailed description serve to explain the principles of embodiments of the disclosed subject matter. No attempt is made to show structural details in more detail than may be necessary for a fundamental understanding of the disclosed subject matter and various ways in which it may be practiced.
FIG. 1 shows an example process according to an implementation of the disclosed subject matter.
FIG. 2 shows an example information flow according to an implementation of the disclosed subject matter.
FIG. 3 shows a computer according to an embodiment of the disclosed subject matter.
FIG. 4 shows a network configuration according to an embodiment of the disclosed subject matter.

### DETAILED DESCRIPTION

The present disclosure provides systems and methods for automatically downloading and storing media on a user's mobile device, where the media is based on the user's media preferences and the user's media activation characteristics associated with previously downloaded media. For example, every day during a certain time period and when the user's device meets certain requirements, such as being connected to a network and/or a power source, systems and methods as disclosed will automatically select a set of music that is relevant to the user's media preferences and will download and store the music locally on the user's device for the user to enjoy. Additionally, once it has been determined that the user has already listened to the previously stored music, new music may be downloaded and stored on the user's device. This new music may be based on the user's media activation characteristics associated with the previously stored music. In some instances the previously stored music that has been listened to by the user may be removed from the mobile device.

As an example, the auto-storing process may begin when the current time is within a certain time period such as 12:00am-5:00am. Initially this time period may be set manually by either the application or by the user, but eventually the system may learn the best time to auto-store. Other system requirements prior to auto-storing may be that the mobile device is connected to a power source and/or the mobile device has a network connection such as to Wi-Fi or an unmetered network. When it is determined that these requirements are met, the auto-storing process may begin. The system may automatically download and store media that is relevant to the user based on a variety of user media preference criteria. For example, user media preference criteria may include songs/artists that may be the same as or similar to a particular song or artist that a user prefers or that the user has been enjoying recently. Additionally, criteria such as the following may be used: recently played songs, songs with high ratings, most frequently played songs, recently played radio stations, recent uploads/purchases, and any other criteria that may indicate a user's media preference. This user media preference criteria may be used to identify and generate one or more sets of songs, each including N number of tracks. This set or sets of songs may be automatically downloaded and stored on the user's mobile device.

As a result, the downloaded and stored set or sets of tracks may be available to the user on his mobile device even when his mobile device is not connected to a network such as while on the subway or an airplane. Additionally, if the stored set or sets of tracks have not been accessed and/or listened to by the user since the previous auto-storing session, the system may not auto-store a new set or sets of tracks since the user has presumably not yet listened to any of the previously auto-stored music. On the other hand, if the stored set or sets of tracks have been accessed and listened to by the user since the previous auto-storing session, the system may use the user's media activation characteristics to identify and generate a new set or sets of tracks to be downloaded and stored during the next auto-storing session that the user is likely to enjoy.

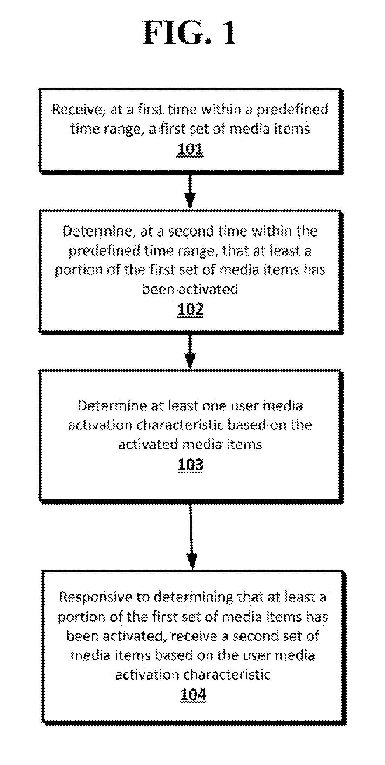

More generally, an implementation of the disclosed subject matter provides a method for automatically downloading and storing media, as shown in FIG. 1. An auto-store session includes a method at a mobile device that includes receiving, at a first time within a predefined time range, a first set of media items, at 101. The first set of media items may be based on a user media preference. Next, at a second time within the predefined time range, it may be determined that at least a portion of the first set of media items has been activated, at 102. Based on the activated media items, at least one user media activation characteristic may be determined, at 103. In response to determining that at least a portion of the first set of media items has been activated, a second set of media items based on the user media activation characteristic may be received, at 104.

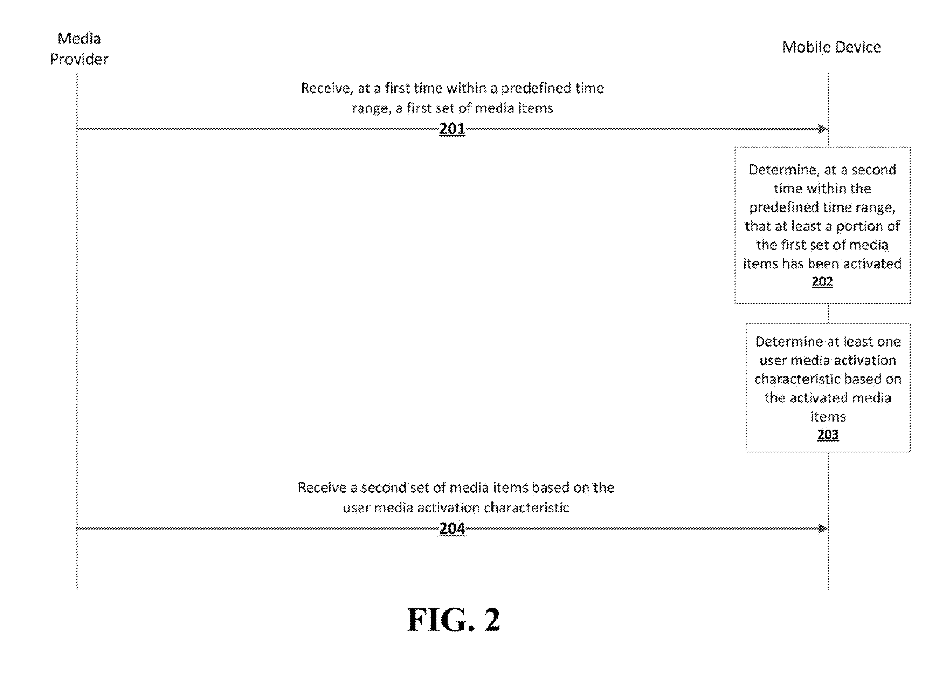

As shown in FIG. 2, an implementation of the disclosed subject matter provides a system for automatically downloading and storing media on a mobile device. A system for an auto-store session as disclosed may include a mobile device comprising a processor configured to receive, at a first time within a predefined time range, a first set of media items from a media provider, at 201. The first set of media items may be based on a user media preference. Next, at a second time within the predefined time range, it may be determined that at least a portion of the first set of media items has been activated, at 202. Based on the activated media items, at least one user media activation characteristic may be determined, at 203. In response to determining that at least a portion of the first set of media items has been activated, a second set of media items based on the user media activation characteristic may be received from the media provider at 204.

A mobile device may be, for example, a mobile phone, a smartphone, a laptop, a tablet, a wearable computer, a portable media player, and any other device capable of activating a media item. Activation of a media item may include playing, viewing, listening, displaying, browsing, interacting, and outputting a media item. In some instances, activating a media item may be in contrast to merely accessing a media item such as by providing feedback (e.g., giving it a "thumbs-down") regarding the media item, skipping a media item, viewing a media item in a list as displayed in an application, and the like. A media item may be a song, a video, a movie, a book, a magazine, a show, a newspaper, an e-book, an album, a television series, and any other media item that a user may wish to activate on a mobile device. More specifically, a media item may include a "playable" media item, such as a song, video, movie, show, album, television series, or similar media item that may be displayed or otherwise played automatically independently of a user's rate of consumption, in contrast to "readable" media items such as magazines, newspapers, books, e-books, and the like. A media item may have at least one media property such as artist, album, genre, mood, language, quality, tempo, release date, producer, title, actor, and author. As an example, the song Paradise may have properties such as artist - Coldplay, genre - rock, mood - chill, release date - 2009, and the like. These media properties may be used to identify and select other media items having similar media properties.

A set of media items may include a plurality of media items and each of the media items in the set may have a common media property. For example, a set of media items may include 20 songs, each song being of the rock genre, or a set of media items may include 4 movies, each movie starring the actor Brad Pitt. Additionally, a set of media items may include multiple sets of media items. For example, a set of media items may include three different sets of media items such as a set of 15 hip-hop songs, a set of 15 rock songs, and a set of 10 pop songs.

As discussed above with regard to FIG.1 and FIG. 2, a mobile device may receive a first set of media items, at 101 and 201. These media items may be selected based on at least one user media preference. A user media preference may be based on a user defined media preference, the user's media viewing history, the user's media listening history, the user's media purchase history, the user's media preview history, the user's social media input associated with media, and any other information suggesting the user's preference for media. Additionally, criteria such as user preferred media settings, recently played media, media with high user ratings/reviews, recently played media stations, recently purchased media, and the like may be used to identify media that the user is likely to enjoy.

As mentioned above, it may be determined that at least a portion of the first set of media items has been activated. Based on these activated media items, the system may determine user media activation characteristics. These user media activation characteristics may be used to determine when the next auto-store session should occur and to select media items for the next auto-store session. User media activation characteristics may be based on a variety of factors associated with activation of previously auto-stored media items by the user. For example, a user media activation characteristic may be based on the number of media items activated in a set of media items, a media property of an activated media item, a number of activations of a particular media item, the number of unactivated media items in a set of media items, the number of activated sets of media items from among a plurality of received sets of media items, a media property of an activated set of media items, and any other information that may be used to inform the next auto-store session.

In some instances, the user media preferences and the user media activation characteristics may be the same and/or overlap. For example, a user media preference for the artist Beyoncé may be based on social media input provided by the user indicating that she prefers songs by Beyoncé. As an example, a user media activation characteristic may be based on the user having listened to a particular song by Beyoncé several times in a previously auto-stored set of songs. Both the user media preference and user media activation characteristic may indicate that the user enjoys songs by Beyoncé, which may be used to select songs for the next auto-store session.

As an example, based on a user's media preference for hip-hop music, a set of 20 hip-hop songs may be have been previously auto-stored on the user's mobile device. The user may have listened to 8 of the 20 songs in the set. Based on this information, 8 new hip-hop songs may be auto-stored during the next auto-store session. In some instances, these 8 new songs may replace the 8 old songs to which the user previously listened, and the 8 old songs may be removed. In another example, the user may have listened to tracks 5, 11, and 18, and started listening to, but skipped, the tracks in between (e.g., tracks 6-10 and 12-17). From this it may be determined that the user did not like the tracks in between and those unactivated tracks may be expired and removed during the next auto-store session. In some instances, a user may skip a track entirely without starting to play it; in this case this track may be deleted. As another example, a user may not have activated a track for some predefined time limit, in which case this track may be deleted. Alternatively, the user may have listened to all 20 songs in the hip-hop set. As a result, a new set of 20 hip-hop songs may be auto-stored during the next session replacing the set to which the user previously listened.

As another example, four different sets of songs may have been previously auto-stored on a user's mobile device. The four different sets may include one set of 20 hip-hop songs, one set of 20 pop songs, one set of 20 rock songs, and one set of 20 country songs. The user may have listened to 8 songs in the hip-hop set, 1 song in the pop set, and 0 songs in the rock and country sets. This information may be used to determine the sets and/or media items to provide in the next auto-store session. Specifically, the portion of the activated media items in the hip-hop set may be removed during the next auto-store session. Accordingly, 8 new hip-hop songs may replace the 8 songs to which the user listened in the hip-hop set. It may be determined that because the user only listened to 1 out of 20 songs in the pop set, the user must not have enjoyed the pop set and accordingly the pop set may be removed entirely. Additionally, because the user did not listen to any songs in the rock or country sets, it may be determined that the user did not like these sets and they may be removed.

As yet another example, during the last three auto-storing sessions, a set of 30 media items may have been stored on a user's mobile device during each session. The user may have activated only the first 5 media items in each set. As a result, the number of media of items in each set may be adjusted for the next auto-storing session, for example, down to 10 media items in each set.

In some instances, it may be determined that a user has not accessed or activated previously auto-stored sets of media items. In this case, rather than presume that the user did not like the media items in the previously auto-stored sets of media items, it may be determined that the user simply has not accessed and/or activated the sets yet. Accordingly, the sets of media items may remain auto-stored on the user's device until the user has accessed and/or activated the media items in the set. On the other hand, if it is determined that the user has accessed the sets of media items but has not activated the media items, it may be determined that the user did not like the media items and the set may be expired and removed from the mobile device. In contrast with activating a media item, accessing a media item may refer to viewing a displayed media item on a mobile device without requesting to activate the media item, opening a media application in accordance with this disclosure but not activating a set of media items or a media item which is displayed in the application, and any other indication that the user has viewed and/or is aware of the presence of a set of media items or a media item but has not requested to activate the media item(s).

Expiring and/or removing media items within a set may be prioritized based on frequency of activation. For example, media items that have never been activated or activated the least number of times may be removed first to allow for auto-storing of new media items. The number of media items and/or sets of media items that may be stored may be limited by the available space on a user's mobile device. In some instances, given sufficient available space on a mobile device, new media items may be auto-stored prior to expiring old or unactivated media items.

Additional requirements prior to beginning an auto-store session on a mobile device as described above may include determining that the mobile device is connected to a network and/or determining that the mobile device is connected to an external power source. These requirements may help to minimize resource consumption on the mobile device while downloading and storing sets of media items. A network may include a cellular network or a non-cellular network such as Wi-Fi, the Internet, and any other network over which the mobile device may receive media. In particular, requiring that the mobile device be connected to a non-cellular network preferentially over a cellular network prior to beginning an auto-store session may avoid the cost associated with metered data use over a cellular network and ensure consistent and faster download speeds, among other advantages. Further, requiring that the mobile device be connected to a power source prior to beginning an auto-store session may prevent depletion of a mobile device's battery while downloading sets of media items. An external power source may be a wall outlet, a wireless charging station, and any other source of power external to the mobile device's battery.

The auto-store session described above may occur during a predefined time range, which may occur daily. As discussed above with regard to FIG. 1, the second time at 102 may occur on a second date after a first date on which the first time occurred at 101. For example, a predefined time range may be from 12:00am to 6:00am and a mobile device may receive a set of media items on Monday at 2:00am, within the predefined time range, as shown at 101. Next, on Tuesday at 1:00am, within the predefined time range, it may be determined that a portion of the set of media items that were auto-stored on Monday has been activated, as shown at 102. The portion of the set of media items that were activated may be replaced by new media items during the auto-store session on Tuesday, at 104. Accordingly, the user may have new media items to activate and enjoy daily, even when his mobile device is not connected to a network.

The predefined time range may be based on a setting such as a user setting, a system setting, a default setting, or a setting based on a predetermined rule. For example, a user may set the predefined time range for auto-storing media to occur daily between 12:00am and 5:00am.

Additionally, the predefined time range may be based on a predetermined rule, which may be based on historical mobile device data associated with usage of the mobile device, network connectivity, external power supply, and any other data that may help to identify a preferred time range. As an example, initially the predefined time period may be based on a default setting, during which auto-storing occurs, such as between midnight and 6:00am. While this time period may work well for most users, some user's mobile devices may be connected to a non-cellular network only during the day, for example a user's mobile device may only have a Wi-Fi connection while at work, or the user may work during the night and may only connect to an external power source and non-cellular network during the day. In this case, the predefined time period may dynamically adjust to match the appropriate usage schedule, network connectivity, and external power supply of each mobile device. Specifically, the system may collect historical mobile device data associated with usage of the mobile device, network connectivity, external power supply, and other data to identify a preferred time range during which the mobile device is used least by a user as well as connected to a non-cellular network and external power source for a long time period. In particular, the predefined time range may be selected based on a variety of factors such as to minimize the impact of battery usage of the mobile device while receiving a set of media items, to connect the mobile device to a non-cellular network preferentially over a cellular network, and based upon a time range during which the user is less likely to use the mobile device.

For example, if a mobile device is typically not receiving input from a user and connected to a non-cellular network and an external power source between the hours of 2:00pm-6:00pm, the system may learn this preferred time range and adjust the predefined time range for the auto-store process accordingly. During the predefined time range of 2:00pm-6:00pm, the system may check at regular intervals to determine whether the device is connected to a Wi-Fi connection and a power source.

In an implementation, the communication between a mobile device and a media provider may be across one or more bridges between the interfaces. For example, the communications between the mobile device and the media provider may be managed or assisted by a third device, such as, a coordinating device, a local coordinator, a remote server, etc. In such cases, the third device may, for example, receive user media activation characteristics from a mobile device and select media items based on the user media activation characteristics for the next auto-store session. The third device may then provide the selected media items to the media provider, in which case, the media provider may provide a set of media items to the mobile device. Alternatively, the third device may receive user media activation characteristics from the mobile device and provide the user media activation characteristics to the media provider. The media provider may select media items based on the user media activation characteristics for the next auto-store session. Accordingly, the media provider may provide a set of media items to the mobile device. In an embodiment, the third device may also act as a bridge between the media provider and the mobile device when providing the set of media items to the mobile device. Furthermore, more than one intermediate device may be implemented to facilitate communication between the mobile device and a media provider.

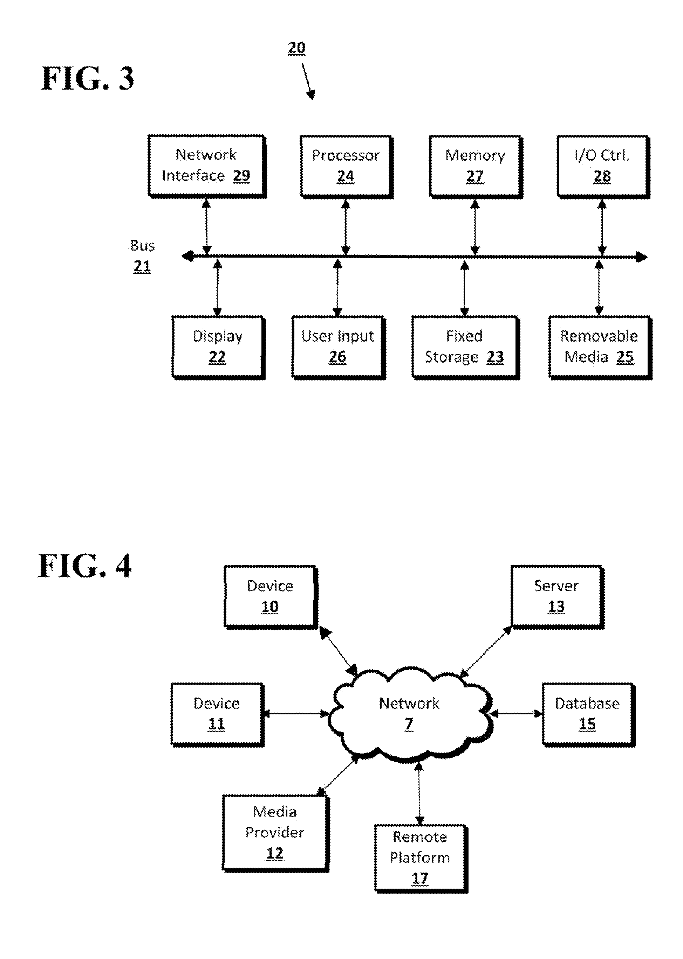

Embodiments of the presently disclosed subject matter may be implemented in and used with a variety of component and network architectures. FIG. 3 is an example computer 20 suitable for implementing embodiments of the presently disclosed subject matter. The computer 20 includes a bus 21 which interconnects major components of the computer 20, such as a central processor 24, a memory 27 (typically RAM, but which may also include ROM, flash RAM, or the like), an input/output controller 28, a user display 22, such as a display screen via a display adapter, a user input interface 26, which may include one or more controllers and associated user input devices such as a keyboard, mouse, and the like, and may be closely coupled to the I/O controller 28, fixed storage 23, such as a hard drive, flash storage, Fibre Channel network, SAN device, SCSI device, and the like, and a removable media component 25 operative to control and receive an optical disk, flash drive, and the like.

The bus 21 allows data communication between the central processor 24 and the memory 27, which may include read-only memory (ROM) or flash memory (neither shown), and random access memory (RAM) (not shown), as previously noted. The RAM is generally the main memory into which the operating system and application programs are loaded. The ROM or flash memory can contain, among other code, the Basic Input-Output system (BIOS) which controls basic hardware operation such as the interaction with peripheral components. Applications resident with the computer 20 are generally stored on and accessed via a computer readable medium, such as a hard disk drive (e.g., fixed storage 23), an optical drive, floppy disk, or other storage medium 25.

The fixed storage 23 may be integral with the computer 20 or may be separate and accessed through other interfaces. A network interface 29 may provide a direct connection to a remote server via a telephone link, to the Internet via an internet service provider (ISP), or a direct connection to a remote server via a direct network link to the Internet via a POP (point of presence) or other technique. The network interface 29 may provide such connection using wireless techniques, including digital cellular telephone connection, Cellular Digital Packet Data (CDPD) connection, digital satellite data connection or the like. For example, the network interface 29 may allow the computer to communicate with other computers via one or more local, wide-area, or other networks, as shown in FIG. 4.

Many other devices or components (not shown) may be connected in a similar manner (e.g., document scanners, digital cameras and so on). Conversely, all of the components shown in FIG. 3 need not be present to practice the present disclosure. The components can be interconnected in different ways from that shown. The operation of a computer such as that shown in FIG. 3 is readily known in the art and is not discussed in detail in this application. Code to implement the present disclosure can be stored in computer-readable storage media such as one or more of the memory 27, fixed storage 23, removable media 25, or on a remote storage location.

FIG. 4 shows an example network arrangement according to an embodiment of the disclosed subject matter. One or more clients 10, 11, such as local computers, smart phones, tablet computing devices, and the like may connect to other devices via one or more networks 7. The network may be a local network, wide-area network, the Internet, or any other suitable communication network or networks, and may be implemented on any suitable platform including wired and/or wireless networks. The clients may communicate with one or more media providers 12, servers 13 and/or databases 15. The devices may be directly accessible by the clients 10, 11, or one or more other devices may provide intermediary access such as where a server 13 provides access to resources stored in a database 15. The clients 10, 11 also may access remote platforms 17 or services provided by remote platforms 17 such as cloud computing arrangements and services. The remote platform 17 may include one or more media providers 12, servers 13 and/or databases 15.

More generally, various embodiments of the presently disclosed subject matter may include or be embodied in the form of computer-implemented processes and apparatuses for practicing those processes. Embodiments also may be embodied in the form of a computer program product having computer program code containing instructions embodied in non-transitory and/or tangible media, such as floppy diskettes, CD-ROMs, hard drives, USB (universal serial bus) drives, or any other machine readable storage medium, wherein, when the computer program code is loaded into and executed by a computer, the computer becomes an apparatus for practicing embodiments of the disclosed subject matter. Embodiments also may be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein when the computer program code is loaded into and executed by a computer, the computer becomes an apparatus for practicing embodiments of the disclosed subject matter. When implemented on a general-purpose microprocessor, the computer program code segments configure the microprocessor to create specific logic circuits. In some configurations, a set of computer-readable instructions stored on a computer-readable storage medium may be implemented by a general-purpose processor, which may transform the general-purpose processor or a device containing the general-purpose processor into a special-purpose device configured to implement or carry out the instructions. Embodiments may be implemented using hardware that may include a processor, such as a general purpose microprocessor and/or an Application Specific Integrated Circuit (ASIC) that embodies all or part of the techniques according to embodiments of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to embodiments of the disclosed subject matter.

The foregoing description, for purpose of explanation, has been described with reference to specific embodiments. However, the illustrative discussions above are not intended to be exhaustive or to limit embodiments of the disclosed subject matter to the precise forms disclosed. Many modifications and variations are possible in view of the above teachings. The embodiments were chosen and described in order to explain the principles of embodiments of the disclosed subject matter and their practical applications, to thereby enable others skilled in the art to utilize those embodiments as well as various embodiments with various modifications as may be suited to the particular use contemplated.

The following items are disclosed:
1. A method comprising, at a mobile device:
   receiving, at a first time within a predefined time range, a first set of media items, wherein the first set of media items is based on a user media preference;
   determining, at a second time within the predefined time range, that at least a portion of the first set of media items has been activated;
   determining at least one user media activation characteristic based on the activated media items, and
   responsive to determining that at least a portion of the first set of media items has been activated, receiving a second set of media items based on the user media activation characteristic.
2. The method of item 1, further comprising determining that the mobile device is connected to a network.
3. The method of item 1 or item 2, further comprising determining that the mobile device is connected to an external power source.
4. The method of any preceding item, further comprising removing the at least a portion of the first set of activated media items.
5. The method of any preceding item, further comprising activating the at least a portion of the first set of media items.
6. The method of item 5, wherein the at least a portion of the first set of media items is activated when the mobile device is not connected to a network.
7. The method of any preceding item, wherein each of the media items in the first and second set of media items independently have at least one media property selected from the group consisting of: artist, album, genre, mood, language, quality, tempo, release date, producer, title, actor, and author.
8. The method of any preceding item, wherein the user media preference is based on at least one selected from the group consisting of: a user defined media preference, the user's media viewing history, the user's media listening history, the user's media purchase history, the user's media preview history, and the user's social media input associated with media.
9. The method of any preceding item, wherein the user media activation characteristic is based on at least one selected from the group consisting of: a number of media items activated in a set of media items, a media property of an activated media item, a number of activations of a media item, a number of unactivated media items in a set of media items, a number of activated sets of media items from among a plurality of received sets of media items, and a media property of an activated set of media items.
10. The method of any preceding item, wherein each of the first and second sets of media items include a plurality of media items independently selected from the group consisting of: a song, a video, a movie, a book, a magazine, a show, a newspaper, an e-book, an album, and a television series.
11. The method of any preceding item, wherein the predefined time range occurs daily.
12. The method of any preceding item, wherein the predefined time range is based on a setting selected from the group consisting of: a user setting, a system setting, a default setting, a setting based on a predetermined rule.
13. The method of item 12, wherein the predetermined rule is based on historical mobile device data associated with usage of the mobile device, network connectivity, and external power supply.
14. The method of any preceding item, wherein the second time occurs on a second date after a first date on which the first time occurred.
15. The method of any preceding item, wherein the predefined time range is selected to minimize the impact of battery usage of the mobile device while receiving the first and second sets of media items.
16. The method of any preceding item, wherein the predefined time range is selected to connect the mobile device to a non-cellular network preferentially over a cellular network.
17. The method of any preceding item, wherein the predefined time range is selected based upon a time range during which the user is less likely to use the mobile device.
18. A system, comprising:
   a mobile device comprising a processor configured to:
      receive, at a first time within a predefined time range, a first set of media items, wherein the first set of media items is based on a user media preference;
      determine, at a second time within the predefined time range, that at least a portion of the first set of media items has been activated;
      determine, at least one user media activation characteristic based on the activated media items, and
      responsive to determining that at least a portion of the first set of media items has been activated, receive a second set of media items based on the user media activation characteristic.
19. The system of item 18, wherein the processor is further configured to determine that the mobile device is connected to a network.
20. The system of item 18 or item 19, wherein the processor is further configured to determine that the mobile device is connected to an external power source.
21. The system of any of items 18 to 20, wherein the processor is further configured to remove the at least a portion of the first set of activated media items.
22. The system of any of items 18 to 21, wherein the processor is further configured to activate the at least a portion of the first set of media items.
23. The system of item 22, wherein the at least a portion of the first set of media items is activated when the mobile device is not connected to a network.
24. The system of any of items 18 to 23, wherein each of the media items in the first and second set of media items independently have at least one media property selected from the group consisting of: artist, album, genre, mood, language, quality, tempo, release date, producer, title, actor, and author.
25. The system of any of items 18 to 24, wherein the user media preference is based on at least one selected from the group consisting of: a user defined media preference, the user's media viewing history, the user's media listening history, the user's media purchase history, the user's media preview history, and the user's social media input associated with media.
26. The system of any of items 18 to 25, wherein the user media activation characteristic is based on at least one selected from the group consisting of: a number of media items activated in a set of media items, a media property of an activated media item, a number of activations of a media item, a number of unactivated media items in a set of media items, a number of activated sets of media items from among a plurality of received sets of media items, and a media property of an activated set of media items.
27. The system of any of items 18 to 26, wherein each of the first and second sets of media items include a plurality of media items independently selected from the group consisting of: a song, a video, a movie, a book, a magazine, a show, a newspaper, an e-book, an album, and a television series.
28. The system of any of items 18 to 27, wherein the predefined time range occurs daily.
29. The system of any of items 18 to 28, wherein the predefined time range is based on a setting selected from the group consisting of: a user setting, a system setting, a default setting, a setting based on a predetermined rule.
30. The system of item 29, wherein the predetermined rule is based on historical mobile device data associated with usage of the mobile device, network connectivity, and external power supply.
31. The system of any of items 18 to 30, wherein the second time occurs on a date after a date on which the first time occurred.
32. The system of any of items 18 to 31, wherein the predefined time range is selected to minimize the impact of battery usage of the mobile device while receiving the first and second sets of media items.
33. The system of any of items 18 to 32, wherein the predefined time range is selected to connect the mobile device to a non-cellular network preferentially over a cellular network.
34. The system of any of items 18 to 33, wherein the predefined time range is selected based upon a time range during which the user is less likely to use the mobile device.

## Claims

1. A method comprising, at a mobile device:
receiving, at a first time within a predefined time range, a first set of media items,
wherein the first set of media items is based on a user media preference;
determining, at a second time within the predefined time range, that at least a portion of the first set of media items has been activated;
determining at least one user media activation characteristic based on the activated media items, and
responsive to determining that at least a portion of the first set of media items has been activated, receiving a second set of media items based on the user media activation characteristic.

2. The method of claim 1, further comprising removing the at least a portion of the first set of activated media items.

3. The method of claim 1 or claim 2, further comprising activating the at least a portion of the first set of media items.

4. The method of claim 3, wherein the at least a portion of the first set of media items is activated when the mobile device is not connected to a network.

5. The method of any preceding claim, wherein the predefined time range is based on a setting selected from the group consisting of: a user setting, a system setting, a default setting, a setting based on a predetermined rule.

6. The method of any preceding claim, wherein the predefined time range is selected to minimize the impact of battery usage of the mobile device while receiving the first and second sets of media items.

7. The method of any preceding claim, wherein the predefined time range is selected to connect the mobile device to a non-cellular network preferentially over a cellular network.

8. The method of any preceding claim, wherein the predefined time range is selected based upon a time range during which the user is less likely to use the mobile device.

9. A system, comprising:
a mobile device comprising a processor configured to:
receive, at a first time within a predefined time range, a first set of media items,
wherein the first set of media items is based on a user media preference;
determine, at a second time within the predefined time range, that at least a portion of the first set of media items has been activated;
determine, at least one user media activation characteristic based on the activated media items, and
responsive to determining that at least a portion of the first set of media items has been activated, receive a second set of media items based on the user media activation characteristic.

10. The system of claim 9, wherein the processor is further configured to remove the at least a portion of the first set of activated media items.

11. The system of claim 9 or claim 10, wherein the processor is further configured to activate the at least a portion of the first set of media items.

12. The system of any of claims 9 to 11, wherein the at least a portion of the first set of media items is activated when the mobile device is not connected to a network.

13. The system of any of claims 9 to 12, wherein the predefined time range is selected to minimize the impact of battery usage of the mobile device while receiving the first and second sets of media items.

14. The system of any of claims 9 to 13, wherein the predefined time range is selected to connect the mobile device to a non-cellular network preferentially over a cellular network.

15. The system of any of claims 9 to 14, wherein the predefined time range is selected based upon a time range during which the user is less likely to use the mobile device.
